# EUROPEAN PATENT SPECIFICATION

(11) **EP 3 967 570 B1**
(45) Date of publication and mention of the grant of the patent: **14.05.2025**
(21) Application number: 21196144.6
(22) Date of filing: 10.09.2021
(51) Int. Cl.: B62B 3/06, B66F 9/075, B62B 5/02

(54) **A SUPPORT ROLLER ARRANGEMENT FOR A LIFT TRUCK**
STÜTZROLLENANORDNUNG FÜR EINEN GABELSTAPLER
AGENCEMENT DE ROULEAU DE SUPPORT POUR CHARIOT ÉLÉVATEUR

(30) Priority: 14.09.2020 SE 2051073
(43) Date of publication of application: 16.03.2022
(73) Proprietor: Toyota Material Handling Manufacturing Sweden AB, 595 81 Mjölby (SE)
(72) Inventor: EKSTRÖM, Simon, 591 52 MOTALA (SE); KARLSSON, Malin, 595 33 MJÖLBY (SE)
(74) Representative: Ström & Gulliksson AB

(56) References cited:
- EP-A1- 2 998 189
- WO-A1-2016/053124
- CN-U- 203 449 855
- DE-B- 1 068 630
- DE-U1- 29 911 310
- US-A- 2 921 771

## Description

### Technical field

The present invention relates to a support roller arrangement for a lift truck wherein a spring device that is coupled to the bogie and to the bracket (30) and configured to force the bogie towards a predetermined resting position. It also relates to a lift truck comprising a support roller arrangement.

### Background art

Examples of support roller arrangements are disclosed in documents CN 203 449 855 U, EP 2 998 189 A1, DE 10 68 630 B, US 2 921 771 A, WO 2016/053124 A1 and DE 299 11 310 U1.

Powered Low Lifting Fork-Lift Trucks or Powered Pallet Trucks comprises a height adjustably fork which is supported on the ground by front support rollers. These trucks are typically used for moving loading pallets in warehouses. Such pallets are supported on the ground by lower baseboards that are arranged parallel and form two channel-like openings for receiving the forks of the pallet truck. Sometimes, it is not possible to maneuver the truck into a position where the forks may be inserted into the appropriate channels of the pallet and instead the pallet is engaged in a direction transverse to the base boards. The forks of the lift trucks are typically provided with support rollers that support the forks on the ground. These rollers may be arranged in a bogie that pivots in order to enable the rollers to climb up onto and over the baseboards of the pallet. Climbing wheels may further be provided to facilitate the entering of the forks through the pallet. A lift truck comprising climbing wheels and a support roller bogie is disclosed in EP3251918.

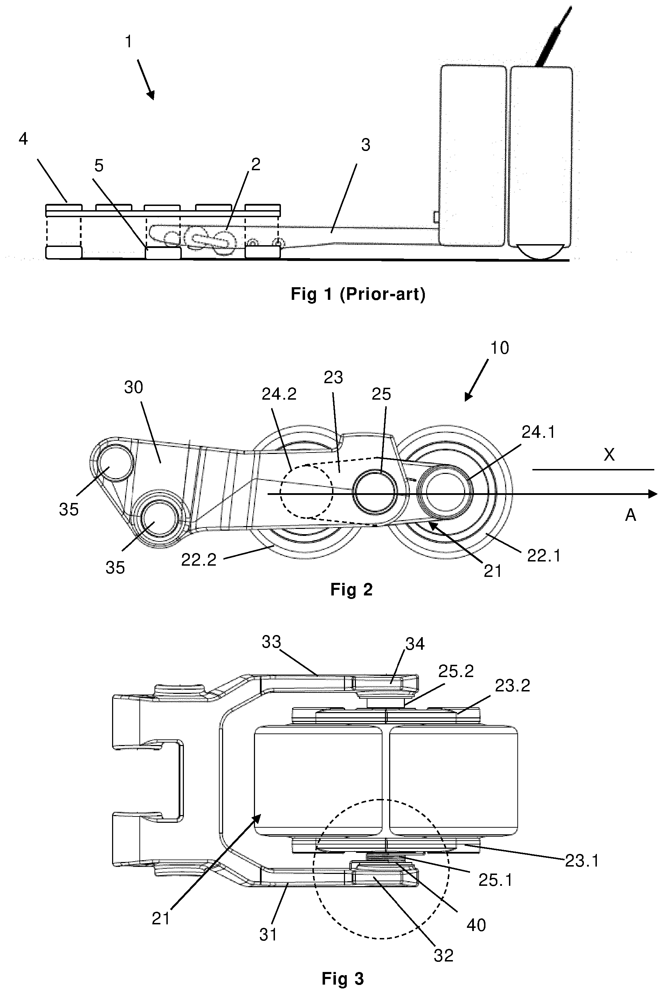

However, a problem related to the known lift truck is that the support roller bogie, when hanging in the air between two baseboards of a pallet may be in an inclined orientation. This situation is shown in Figure 1. A problem thereby is that when the forks 3 of the lift truck 1 proceeds through the pallet 4, the inclined support roller bogie 2 may hit the following base board 5. This in turn causes negative effects such as noise, shocks and movement of the pallet 4.

Thus, it is an object of the present invention to provide a support roller arrangement for a lift truck that solves or mitigates at least one of the problems of the prior art.

A further object of the present invention is to provide a support roller arrangement for a lift truck, which allows for smooth engagement between the forks of the lift truck and the pallet.

Yet a further object of the present invention is to provide a support roller arrangement for a lift truck which is of robust and simple construction and that may be realized at a low cost.

### Summary of the invention

According to the present invention, at least one of these objects is met by a support roller arrangement according to the appended claims.

The support roller arrangement according to the present invention provides an advantage in that the bogie is allowed to assume an inclined orientation when climbing up on a baseboard of a pallet. However, as soon as the bogie has passed the baseboard and loses contact therewith it is returned to a predetermined resting position, which may be selected such that the bogie does not hit the subsequent baseboard. This reduces or eliminates the risk that the bogie hits the subsequent baseboard as the forks of the lift-truck proceeds through the pallet. In all, the support roller arrangement provides for easy and smooth engagement of pallets in a direction transverse to baseboards.

Alternatives are set out in the appended dependent claims.

The present invention also relates to a fork lift truck comprising a support roller arrangement according to appended claims.

### Brief description of the drawings

- Fig. 1:: A lift truck with a support roller arrangement according to the prior-art.
- Fig. 2:: A support roller arrangement according to a first alternative of the present invention in side-view.
- Fig. 3:: A support roller arrangement according to the first alternative of the present invention in a view from above.
- Fig. 4:: An exploded view of a support roller arrangement according to first alternative of the present invention.
- Fig. 5:: An enlarged portion of the support roller arrangement of Fig. 3.
- Fig. 6, 7:: A lift truck according to the present disclosure engaging a pallet.
- Fig. 8:: A support roller arrangement according to a second alternative of the present invention.
- Fig. 9:: A support roller arrangement according to a third alternative of the present invention.

### Detailed description of embodiments

The support roller arrangement according to the present invention will now be described more fully hereinafter. The support roller arrangement according to the present invention may however be embodied in many different forms and should not be construed as limited to the embodiments set forth herein. Rather, these embodiments are provided by way of example. The scope of the present invention is limited only by the appended claims.

Same reference numbers refer to same elements throughout the description.

Further, in following description, any references to direction or positions or orientation are in relation to a situation in which the support roller arrangement 10 is mounted on the engagement means 51.1, 52.1 of a lift truck 50 that positioned on a horizontal ground surface.

Figure 2 shows a support roller arrangement 10 according to a first alternative of the present invention.

The support roller arrangement 10 comprises a bogie 21 which comprises a pair of support rollers 22.1, 22.2 that are rotationally arranged in a bogie frame 23. Turning to figure 3, the bogie frame 23 comprises first and second bogie frame sides 23.1, 23.2, which may be arranged parallel and be in the form of metal sheets or plates. Returning to figure 2, the pair of support rollers 22.1, 22.2 is arranged in series, i.e. one roller in front of the other, between the bogie frame sides 23.1, 23.2. Each roller is rotationally attached to the bogie frame 23 by a respective roller pivot shaft 24.1, 24.2 that extends between the first bogie frame side 23.1 and the second bogie frame side 23.2 and through the respective roller (see figure 3).

The roller support arrangement further comprises a bracket 30 for attaching the bogie 21 to a lift-truck 50.

The bracket 30 comprises a front end to which the bogie 21 is pivotally is attached by the bogie pivot shaft 25. Turning to figure 3, the bracket 30, may have a first and a second fork tine 31, 33 which extend on opposite sides of the bogie 21. The ends of the first and the second fork tines 31, 33 thereby constitute the front end of the bracket 30. Turning to figure 2, the rear end of the bracket 30 is configured to be attached to the lift-truck 50. Typically, the rear end of the bracket 30 is configured to be attached to the underside of a ground supported load engagement of a lift truck not shown). Such a load engagement means may be in the form of ground supported lift-forks that are movable in vertical direction. The rear end of the bracket 30 is typically configured to be pivotally attached to underside of a ground supported load engagement means. For this purpose, the rear end of the bracket 30 may comprise diagonally spaced apart openings 35 that may be attached to pivot shafts on the underside of the ground supported load engagement means. The bracket 30, together with pivot shafts (not shown) between the load engagement means and the bogie 21 thereby forms a linkage which ensures that the pair of rollers 22.1, 22.2 remain in contact with the ground when the load engagement means 51.1, 52.1 moved vertically. This feature is known in the art and need not be described further here within.

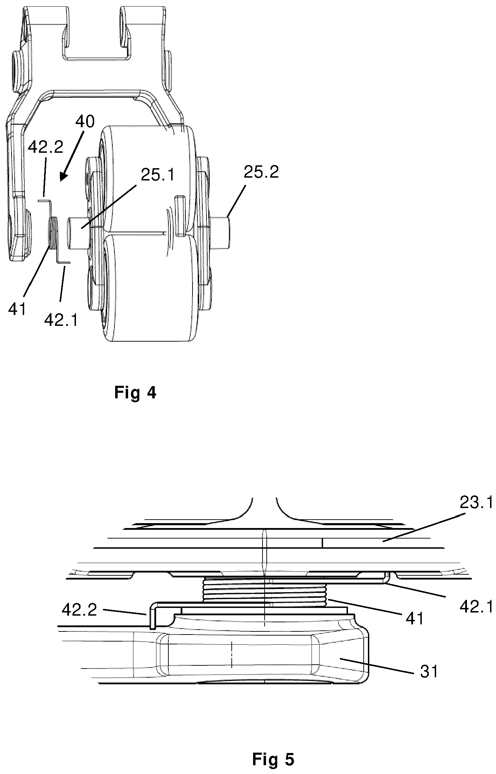

The bogie 21 is pivotally attached to the front end of the bracket 30. For this purpose, the bogie 21 comprises a bogie pivot shaft 25. The bogie pivot shaft 25 extends from the bogie frame 23 and is pivotally journalled in the front end of the bracket 30. The bogie pivot shaft 25 may be fixed to the bogie frame 23 such that the bogie 21 and the bogie pivot shaft 25 pivots relative the bracket 30. In the alternative of the support roller arrangement 10 shown in figure 3, the bogie pivot shaft 25 comprises a first bogie pivot shaft section 25.1 and a second bogie pivot shaft section 25.2. The first bogie pivot shaft section 25.1 extends from the first bogie side frame 23.1 and is pivotally received in an opening 32 in the first fork tine 31. The second bogie pivot shaft section 25.2 extends from the second bogie frame side 23.2 and is pivotally received in an opening 34 in the second fork tine 33. In figure 4, the first and the second bogie pivot shaft sections 25.1, 25.2 are separate sections. However, the bogie pivot shaft 25 may also be realized as a single shaft. Typically, the first and second bogie pivot shaft sections 25.1, 25.2 extend respectively from a position between the first and the second roller. This facilitates a horizontal resting position of the bogie 21.

According to the present invention, the roller support arrangement comprises at least one spring device 40 which is coupled to the bogie 21 and to the bracket 30. The spring device 40 is configured to force or move the bogie 21 to a predetermined resting position. In detail, the spring device 40 is configured to force the bogie 21 from an inclined position, in which the orientation of the bogie 21 deviates from the resting position, to the resting position. In the resting position, the bogie 21 may be level, i.e. oriented horizontally. In detail, the predetermined resting position may be relative a horizontal plane (X) and may be defined by the orientation of a longitudinal axis (A) that extends through the first and the second roller pivot shafts 24.1, 24.2 relative the horizontal plane (X). For example, as shown in figure 2, the spring device 40 is configured to force the bogie 21 to a resting position in which the bogie 21 is oriented parallel with the horizontal plane (since figure 2 is a plain side view, the horizontal plane is illustrated with a plain line). In the inclined position, the angular orientation of the bogie 21 (and the longitudinal axis (A) deviates from the horizontal plane (X).

According to a first alternative of the present invention, the spring device 40 is a torsion spring. The encircled area of figure 3 shows the spring device 40.

Figure 4, shows an exploded view of the support roller arrangement 10 according to the first alternative of the present disclosure. Thus, the spring device 40, which may be manufactured of spring steel wire, comprises a coiled portion 41 and a first spring end 42.1 and a second spring end 42.2. The spring device may be dimensioned in view of the bogie in question. That is, in view of factors such as the dimensions and weight of the bogie and the pivoting distance back and forth from a resting position. A suitable spring device in the form of a torsion spring is available commercially from the company Lesjöfors AB under the article no: 7183: TSR 2,5X28X25X3.

The coiled portion 41, is arranged around one of the bogie pivot shaft sections 25.1, 25.2, in this case the first bogie pivot shaft section 25.1. Turning to figure 5, which shows an enlarged view of the circled area of figure 3, the first spring end 42.1 of the spring device 40 is coupled to the bogie 21, in this case attached to first bogie frame side 23.1. The second end 42.2 of the spring device 40 is coupled to the bracket 30, in this case attached to the first fork tine 31. Attachment of the ends 42.1, 42.2 of the spring device 40 may be achieved by bending the ends 42.1, 42.2 by e.g 90° and inserting them into appropriate openings in the bracket 30 and the bogie frame 23.

It is appreciated that a second spring device 40, in the form of a torsion spring, may be arranged around the second bogie pivot shaft section 25.2 and coupled by a first spring end 42.1 to the bogie 21, in this case the second bogie frame side 23.2, and by second spring end 42.2 to the bracket 30 in this case to the second fork tine 33. (this is not shown in the drawings).

In operation, the bogie 21 may be forced to pivot in clockwise or anti-clock wise direction, for example as result of the bogie 21 climbing up on a pallet baseboard. Pivoting of the bogie 21 around the bogie pivot shaft 25 causes biasing of the spring device 40. When the bogie 21 loses the ground contact and no external forces acts on the bogie 21, the spring device relaxes from its biased state and forces the bogie 21 to pivot back to its resting position. Typically, in the resting position, no or small spring forces act on the bogie 21.

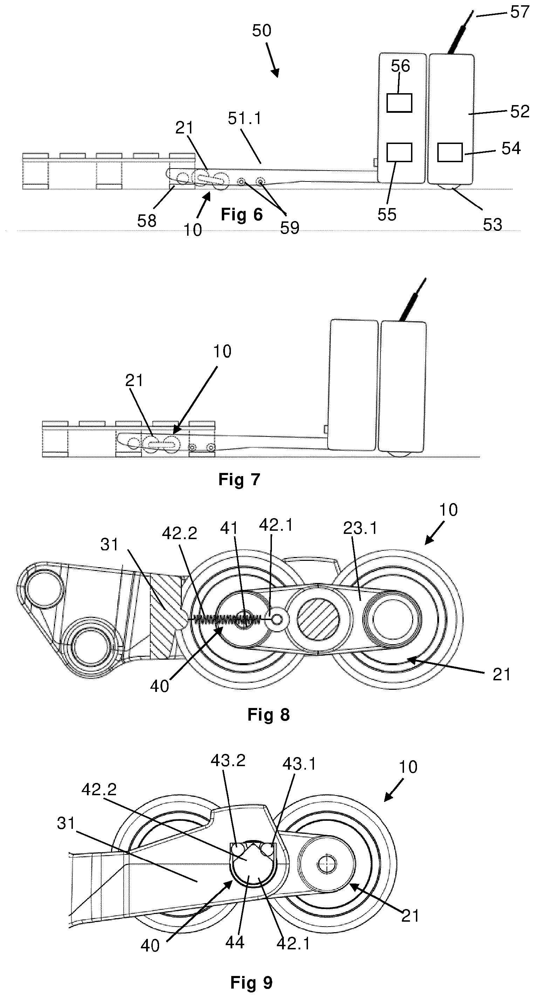

Figure 6 and 7 shows schematically a lift-truck 50 according to the present invention in operation of engaging a pallet. Turning to figure 6, the lift-truck 50 may be a fork-lift truck, such as a powered pallet truck, powered stacker truck and low lifting order picking trucks. The lift-truck 50 comprises a first and a second vertically movable ground-supported load engagement means 51.1,51.2 in the form of a first and a second lifting fork arm (in figure 6 only load engagement means 51.1 is visible). The lift-truck 50 further comprises a housing 52. A drive wheel 53 is arranged underneath the housing 52. The housing 52 comprises a lifting/lowering arrangement 54 for raising or lowering the load engagement means 51.1, 51.2. For example, the lifting/lowering arrangement 54 may comprise a hydraulic piston and cylinder coupled to the load engagement means 51.1, 52.1 and to hydraulic circuit including a hydraulic pump coupled to a motor (these features are not shown in detail). The housing 52 further comprises an electric motor 55 for propelling the drive wheel 53 of the lift-truck 50 and the hydraulic pump. The housing 52 further comprises an Electronic Control Unit (ECU) 56, for example a Programmable Logic Controller, which is configurable to control the motor 55 and the lifting/lowering arrangement 54 and other necessary functions of the lift-truck 50. The lift-truck 50 further comprises an operator's control 57 arranged on the housing 52 and other components (not shown) such as an electric battery and necessary electrical wiring, electronic circuits and hydraulic components as is known to the skilled person.

The load engagement means 51.1, 52.2 extend from the front of the housing 52 and comprises each at least one support roller arrangement 10 according to the present invention for supporting the respective load engagement means 51.1, 52.2 on the ground surface that the lift-truck 50 is running on. The support roller arrangement 10 comprises, as described above a bracket 30 and a bogie 21 with a pair of support rollers 22.1, 22.2 that is attached in known manner, by a linkage (not shown), to the underside of the load engagement means 51.1, 52.2. Each load engagement means 51.1, 52.2 may further comprises a climbing wheel 58 which is arranged in front of the bogie 21. The load engagement means 51.1, 52.1 may further comprises a two auxiliary wheels 57 which are arranged behind the bogie 21. The climbing wheel 56, and the auxiliary wheels 59 are pivotally attached to shafts (not shown) to the lower side of the load engagement means 51.1, 52.2 and out of contact with the ground surface.

In figure 6, the lift-truck 50 is in a position where the bogie 21 has started to climb up onto the baseboard of the pallet. In this situation, the weight of the lift-truck 50 forces the bogie 21 to pivot such that the bogie 21 is inclined and may roll up onto the baseboard. Pivoting of the bogie 21 causes the biasing of the spring device as described hereinabove. The inclined orientation of the bogie 21 may remain in more or less degree until the bogie 21 has passed the baseboard and is out of contact with the underlying surface as shown in figure 7. Since no forces now are acting on the bogie 21, the spring device 40 relaxes from its biased state and causes the bogie 21 to return to its horizontal resting position (see figure 7). The bogie 21 will then easily and without any impact roll over the next bas board of the pallet.

Although a particular embodiment has been disclosed in detail this has been done for purpose of illustration only, and is not intended to be limiting. In particular, it is contemplated that various substitutions, alterations and modifications may be made within the scope of the appended claims.

For example, figure 8 shows a roller support arrangement according to a second alternative of the present disclosure. The roller support arrangement according to the second alternative comprises a bogie 21 and a bracket 30 for attaching the bogie 21 to the load engagement means 51.1, 52.1 of a lift-truck 50. These features are identical to the bogie 21 and bracket 30 as described under the first alternative. However, according to the second the alternative of the present invention, the spring device 40 is an extension spring having a coiled portion 41 and a first and a second spring end 42.1, 42.2. The first spring end 42.1 of the draw spring is coupled to the bogie, in this case the first bogie frame side 23.1, The second end 42.2 of the draw spring is coupled to the bracket 30, in this case attached to the first fork tine 31. In operation, when the bogie 21 is inclined during climbing, the draw spring will be biased by the pulling force from the bogie 21. When the bogie 21 loses ground contact the spring device 40 relaxes and forces the bogie 21 to pivot towards a predetermined resting position. Thus, if the bogie 21 is raised out of ground contact, the pulling force of the draw spring will force the bogie 21 to pivot back form an inclined position to its resting position (as shown in figures 6 and 7).

Figure 9 shows a roller support arrangement according to a third alternative of the present invention. The roller support arrangement according to the third alternative comprises a bogie 21 and a bracket 30 for attaching the bogie 21 to the load engagement means 51.1, 52.1 of a lift-truck 50. These features are identical to the bogie 21 and bracket 30 as described under the first alternative. However, according to the third the alternative of the present invention, the spring device 40 is a torsion element arrangement. The torsion element arrangement comprises a first and a second resilient abutment bodies 43.1, 43.2 that are coupled to the bracket 30. In this case the abutment bodies 43.1, 43.2 are attached spaced apart in one of the openings for the bogie pivot shaft 25 in the rear end of the first fork tine 31. The abutment bodies 43.1, 43.2 may be made of rubber and may be in the form of cylinders. The torsion element arrangement further comprises an actuator 44 which is coupled to the bogie 21, in this case attached to the end of the bogie pivot shaft 25. The actuator 44 has a first end 42.1 which is attached to the end of the bogie pivot shaft 25 (not sown) and a second end 42.2 which extend in to the space between the first and the second abutment body 43.1, 43.2. The actuator 44 is configured such that, when the bogie 21 is in the predetermined resting position, the actuator 44 is in contact with the first and the second abutment body 43.1, 43.2 and exert the same force, or no force on the first and the second abutment body 43.1, 43.2. However, when the bogie 21 is inclined, the actuator 44 rotates with the bogie pivot shaft 25 and exerts thereby a pressing force onto the abutment body 43.1, 43.2 that is in the pivoting direction of the bogie 21. As soon as the pair of rollers 22.1, 22.2 of the bogie 21 the is out of ground contact, in the abutment body 43.1, 43.2 will relax from its compressed, biased state and force the actuator 44 in counter direction and which causes the bogie 21 to pivot towards its resting position.

## Claims

1. A support roller arrangement (10) for a lift truck (50) comprising:
- a bogie (21) with a pair of support rollers (22.1, 22.2);
- a bracket (30) for attaching the bogie (21) to a lift truck (50), wherein the bogie (21) is pivotally attached to the bracket (30), wherein a spring device (40) that is coupled to the bogie (21) and to the bracket (30) and configured to force the bogie (21) towards a predetermined resting position (A) **characterized in that**
the spring device (40) is a coiled wire spring with a coiled portion (41) and a first end (42.1) that is attached to the bogie (21) and a second end (42.2) that is attached to the bracket (30).

2. The support roller arrangement (10) according to claim 1, wherein the bogie (21) comprises a bogie frame (23) and wherein the support rollers (22.1, 22.2) are rotatable arranged in the bogie frame (23).

3. The support roller arrangement (10) according to claim 1 or 2, wherein the bogie (21) is pivotally attached to the bracket (30) by a bogie pivot shaft (25).

4. The support roller arrangement (10) according to anyone of claims 1 - 3, wherein the bracket (30) comprises a first fork tine (31) and a second fork tine (33) and wherein the bogie (21) is attached to the first fork tine (31) by a first bogie pivot shaft section (25.1) and to the second fork tine (33) by a second bogie pivot shaft section (25.2).

5. The support roller arrangement (10) according to anyone one of claim 1 - 4, wherein the spring device (40) is a torsion spring.

6. The support roller arrangement (10) according to claims 4 - 5 wherein the coiled portion (41) of the spring device (40) is arranged around a first or a second bogie pivot shaft section (25.1, 25.2) and wherein a first end (42.1) of the spring device (40) is attached to the bogie (21) and a second end (42.2) is attached to the bracket (30).

7. A fork lift truck (50) having a first and a second height adjustable load engagement means (51.1, 52.1), **characterized in that** said first and a second height adjustable load engagement means (51.1, 52.1) respectively comprises a support roller arrangement (10) according to anyone of claims 1 - 6.

## Patentansprüche

1. Stützrollenanordnung (10) für einen Hubwagen (50), umfassend:
- ein Fahrgestell (21) mit einem Paar Stützrollen (22.1, 22.2);
- eine Halterung (30) zum Befestigen des Fahrgestells (21) an einem Hubwagen (50), wobei das Fahrgestell (21) schwenkbar an der Halterung (30) befestigt ist, wobei eine Federvorrichtung (40), die mit dem Fahrgestell (21) und der Halterung (30) verbunden ist und so konfiguriert ist, dass sie das Fahrgestell (21) in Richtung einer vorbestimmten Ruheposition (A) drückt, **dadurch gekennzeichnet, dass** die Federvorrichtung (40) eine Drahtschraubenfeder mit einem gewundenen Abschnitt (41) und einem ersten Ende (42.1), das an dem Fahrgestell (21) angebracht ist, und einem zweiten Ende (42.2), das an der Halterung (30) angebracht ist, ist.

2. Stützrollenanordnung (10) nach Anspruch 1, wobei das Fahrgestell (21) einen Fahrgestellrahmen (23) umfasst und wobei die Stützrollen (22.1, 22.2) drehbar im Fahrgestellrahmen (23) angeordnet sind.

3. Stützrollenanordnung (10) nach Anspruch 1 oder 2, wobei das Fahrgestell (21) über eine Fahrgestell-Schwenkwelle (25) schwenkbar an der Halterung (30) angebracht ist.

4. Die Stützrollenanordnung (10) gemäß einem der Ansprüche 1-3, wobei die Halterung (30) einen ersten Gabelzinken (31) und einen zweiten Gabelzinken (33) umfasst und wobei das Drehgestell (21) an dem ersten Gabelzinken (31) durch einen ersten Fahrgestell-Schwenkwellenabschnitt (25.1) und an dem zweiten Gabelzinken (33) durch einen zweiten Fahrgestell-Schwenkwellenabschnitt (25.2)

5. Stützrollenanordnung (10) nach einem der Ansprüche 1 - 4, wobei die Federvorrichtung (40) eine Torsionsfeder ist.

6. Die Stützrollenanordnung (10) gemäß den Ansprüchen 4 - 5, wobei der gewickelte Abschnitt (41) der Federvorrichtung (40) um einen ersten oder einen zweiten Fahrgestell-Schwenkwellenabschnitt (25.1, 25.2) angeordnet ist und wobei ein erstes Ende (42.1) der Federvorrichtung (40) an dem Fahrgestell (21) angebracht ist und ein zweites Ende (42.2) an der Halterung (30) angebracht ist.

7. Gabelstapler (50) mit einer ersten und einer zweiten höhenverstellbaren Lastaufnahmeeinrichtung (51.1, 52.1), **dadurch gekennzeichnet, dass** die erste und die zweite höhenverstellbare Lastaufnahmeeinrichtung (51.1, 52.1) jeweils eine Stützrollenanordnung (10) gemäß einem der Ansprüche 1 bis 6 umfasst.

## Revendications

1. Agencement de galets de support (10) pour un chariot élévateur (50) comprenant :
- un bogie (21) doté d'une paire de galets de support (22.1, 22.2) ;
- un support (30) permettant de fixer le bogie (21) à un chariot élévateur (50), dans lequel le bogie (21) est fixé de façon pivotante au support (30), dans lequel un dispositif à ressort (40) est accouplé au bogie (21) et au support (30) et configuré pour forcer le bogie (21) en direction d'une position de repos (A) prédéterminée **caractérisé en ce que**
le dispositif à ressort (40) est un ressort métallique hélicoïdal doté d'une partie hélicoïdale (41) et d'une première extrémité (42.1) qui est fixée au bogie (21) et d'une seconde extrémité (42.2) qui est fixée au support (30).

2. Agencement de galets de support (10) selon la revendication 1, dans lequel le bogie (21) comprend un châssis de bogie (23) et dans lequel les galets de support (22.1, 22.2) sont agencés en rotation dans le châssis de bogie (23).

3. Agencement de galets de support (10) selon la revendication 1 ou 2, dans lequel le bogie (21) est fixé de façon pivotante au support (30) par un arbre de pivotement de bogie (25).

4. Agencement de galets de support (10) selon l'une quelconque des revendications 1 à 3, dans lequel le support (30) comprend une première dent de fourche (31) et une seconde dent de fourche (33) et dans lequel le bogie (21) est fixé à la première dent de fourche (31) par une première section d'arbre de pivotement de bogie (25.1) et à la seconde dent de fourche (33) par une seconde section d'arbre de pivotement de bogie (25.2).

5. Agencement de galets de support (10) selon l'une quelconque des revendications 1 à 4, dans lequel le dispositif à ressort (40) est un ressort de torsion.

6. Agencement de galets de support (10) selon les revendications 4 à 5, dans lequel la partie hélicoïdale (41) du dispositif à ressort (40) est agencée autour d'une première ou d'une seconde section d'arbre de pivotement de bogie (25.1, 25.2) et dans lequel une première extrémité (42.1) du dispositif à ressort (40) est fixée au bogie (21) et une seconde extrémité (42.2) est fixée au support (30).

7. Chariot élévateur (50) ayant un premier et un second moyen de mise en prise de charge réglable en hauteur (51.1, 52.1), **caractérisé en ce que** lesdits premier et second moyens de mise en prise de charge réglables en hauteur (51.1, 52.1) comprennent respectivement un agencement de galets de support (10) selon l'une quelconque des revendications 1 à 6.
